(19) Europäisches Patentamt
European Patent Office
Office européen des brevets

(11) **EP 3 100 923 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(51) Int Cl.:
***B60T 13/58*** *(2006.01)*     ***B60W 10/196*** *(2012.01)*

(21) Anmeldenummer: **16001122.7**

(22) Anmeldetag: **17.05.2016**

(54) **BESCHLEUNIGUNGSREGLER ZUR REGELUNG VON MOTOR- UND DAUERBREMSANFORDERUNGEN**

ACCELERATION CONTROLLER FOR CONTROLLING ENGINE AND CONTINUOUS BRAKING REQUIREMENTS

REGULATEUR D'ACCELERATION DESTINE A REGULER DES EXIGENCES DE FREINAGE PERMANENT ET DE MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2015 DE 102015007164**

(43) Veröffentlichungstag der Anmeldung:
**07.12.2016 Patentblatt 2016/49**

(73) Patentinhaber: **MAN Truck & Bus AG**
**80995 München (DE)**

(72) Erfinder:
• **Herzog, Martin**
  **83026 Rosenheim (DE)**
• **Weller, Ralf**
  **80638 München (DE)**

(74) Vertreter: **v. Bezold & Partner Patentanwälte - PartG mbB**
**Akademiestraße 7**
**80799 München (DE)**

(56) Entgegenhaltungen:
**WO-A1-2013/005903**     **DE-A1-102013 210 672**

EP 3 100 923 B1

**Beschreibung**

Die Erfindung betrifft einen Regler, insbesondere einen Beschleunigungsregler zur Regelung von Motor- und Dauerbremsanforderungen eines Nutzfahrzeugs.

Aus der Praxis ist bekannt, dass für die Geschwindigkeits- und Beschleunigungsregelung in Lastkraftwagen für den Motor und die Dauerbremsen zwei zunächst unabhängige Regler verwendet werden. Ein Grund hierfür ist, dass aufgrund der üblichen Spreizung von z. B. 4 km/h die Regler über die Geschwindigkeit entkoppelt sind. Im Truckbereich werden teilweise sogar bis zu vier Regler eingesetzt, z. B. zwei Geschwindigkeitsregler und zwei Beschleunigungsregler, welche im Übergangsbereich alle gleichzeitig wirken können.

Beispielsweise kann ein erster Regler als Fahrgeschwindigkeitsregler (Tempopilot) ausgeführt sein, der über den Antriebsstrang, beispielsweise über die Kraftstoffzufuhr im Motor, die Geschwindigkeit des Fahrzeugs auf eine erste Sollgeschwindigkeit (Setzgeschwindigkeit des Tempopiloten) regelt.

Ein zweiter Regler kann als Bremsgeschwindigkeitsregler (Bremsomat) ausgeführt sein, der über eine Bremseinrichtung des Fahrzeugs die Fahrzeuggeschwindigkeit so regelt, dass eine zweite Sollgeschwindigkeit (Setzgeschwindigkeit des Bremsomaten), die über der vorstehend genannten ersten Sollgeschwindigkeit des ersten Reglers liegt, nicht überschritten wird. Dadurch kann verhindert werden, dass Fahrzeuge, insbesondere schwere Nutzfahrzeuge, bei Fahrten auf Gefällestrecken auch ohne Kraftstoffzufuhr, d. h. im nicht befeuerten Betrieb, durch den Hangabtrieb zu weit über die eingestellte Fahrerwunschgeschwindigkeit (erste Sollgeschwindigkeit) hinaus beschleunigen. Vorzugsweise stellt der Bremsgeschwindigkeitsregler das Einhalten der zweiten Sollgeschwindigkeit mittels einer verschleißfreien Dauerbremse (auch als geregelte Dauerbremse bezeichnet) sicher und nicht mittels der normalen Betriebsbremse. Wie eingangs erwähnt, liegt die Sollgeschwindigkeit des Bremsenreglers in der Regel um einen festen Wert (als Offset oder Spreizung bezeichnet) über der Sollgeschwindigkeit des Reglers für die Motormomente. Dies stellt sicher, dass die beiden Regelsysteme zusammen und unabhängig voneinander arbeiten können und sich nicht gegenseitig störend beeinflussen. Der erste Regler für die Motormomente regelt z. B. auf 85 km/h und der zweite Bremsenregler auf 89 km/h.

Nachteilig an diesem bekannten Ansatz ist, dass dies in Übergängen zwischen den anfordernden Funktionen eine nachgelagerte Funktion notwendig macht, welche die Momentenanforderungen der beiden Regler an die antreibenden bzw. verzögernden Aktuatoren gegeneinander verschränkt oder überblendet. Ohne diese Funktion können ansonsten gerade bei kleinen Spreizungen eine gleichzeitige Ansteuerung von Motor und Bremse erfolgen. Als Folge kann es notwendig sein, die unabhängigen Regler neu zu initialisieren, wodurch der gelernte I-Anteil eines Integrierglieds der Regler verloren geht, wodurch es zu unkomfortablem Fahrverhalten kommt.

Im Stand der Technik sind Parallelschaltungen von PI-Regler bereits bekannt (siehe z.B. WO 2013/005903 A1).

Es ist somit eine Aufgabe der Erfindung, eine verbesserte Möglichkeit zur Geschwindigkeits- und/oder Beschleunigungsregelung bereitzustellen, mit der Nachteile herkömmlicher Techniken vermieden werden können. Die Aufgabe der Erfindung ist es insbesondere, eine verbesserte Möglichkeit zur Regelung von Motor- und Dauerbremsanforderungen in Nutzfahrzeugen bereitzustellen, um ein komfortableres Fahrverhalten zu erzielen.

Diese Aufgaben werden durch einen Regler mit den Merkmalen des unabhängigen Anspruchs 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird ein Regler für ein Fahrzeug, insbesondere ein Beschleunigungsregler zur Regelung von Motor- und Dauerbremsanforderungen eines Kraftfahrzeugs, bereitgestellt, der im Gegensatz zu herkömmlichen Reglern nicht nur eine, sondern zwei Sollbeschleunigungen verarbeiten kann, insbesondere eine Sollbeschleunigung für wenigstens einen antreibenden Aktuator und eine Sollbeschleunigung für wenigstens einen verzögernden Aktuator. Dies bietet den Vorteil, dass statt zwei unabhängigen Beschleunigungsreglern ein zentraler Beschleunigungsregler zum Einsatz kommen kann. Der antreibende Aktuator kann beispielsweise ein Verbrennungsmotor des Fahrzeugs sein. Der verzögernde Aktuator kann beispielsweise eine Dauerbremse des Fahrzeugs sein, wie eine geregelte Motorbremse, ein Pritarder oder ein Sekundärretarder.

Der Regler umfasst hierbei einen ersten Regelzweig, der ein erstes Integrierglied und ein erstes Proportionalglied umfasst, wobei der erste Regelzweig mit einer Sollbeschleunigung für wenigstens einen antreibenden Aktuator und einer Ist-Beschleunigung des Fahrzeugs beaufschlagt wird, d. h., diese Größen werden dem Regler als Eingangsgröße zugeführt. Ferner gibt der erste Regelzweig eine Stellgröße für den wenigstens einen antreibenden Aktuator aus. Diese Sollbeschleunigung wird nachfolgend als erste Sollbeschleunigung und die Stellgröße als erste Stellgröße bezeichnet, um diese Größen klarer von den korrespondierenden Größen eines zweiten Regelzweiges unterscheiden zu können. Der erste Regelzweig wird nachfolgend auch als antreibender Zweig bezeichnet.

Der Regler umfasst ferner einen zweiten Regelzweig, der ein zweites Integrierglied und ein zweites Proportionalglied umfasst, wobei der zweite Regelzweig mit einer Sollbeschleunigung für wenigstens einen verzögernden Aktuator und der Ist-Beschleunigung beaufschlagt wird und eine Stellgröße für den wenigstens einen verzögernden Aktuator ausgibt. Diese Sollbeschleunigung wird nachfolgend als zweite Sollbeschleunigung und die Stellgröße für den wenigstens einen verzögernden Aktuator als zweite Stellgröße bezeichnet, um diese Größen von den korrespondierenden Größen des ersten Regelzweigs zu unterscheiden. Der zweite Regelzweig wird nachfolgend auch als verzögernder Zweig bezeichnet.

Der Regler umfasst ferner ein Entscheidungsglied, das mit der ersten Stellgröße und der zweiten Stellgröße und den Ausgangswerten des ersten und zweiten Integrierglieds beaufschlagt wird und eine Stellgröße als Momentenanforderung an den wenigstens einen antreibenden Aktuator (nachfolgend als erste Ausgabestellgröße bezeichnet), eine Stellgröße als Momentenanforderung an den wenigstens einen verzögernden Aktuator (nachfolgend als zweite Ausgabestellgröße bezeichnet) und einen I-Anteil, mit dem jeweils das erste und das zweite Integrierglied beaufschlagt wird, ausgibt.

Um zu entscheiden, ob und welche der ersten und zweiten Stellgröße an die zugeordneten antreibenden bzw. verzögernden Aktuatoren weitergeleitet werden soll und welcher I-Anteil für die Berechnung der Integrierglieder im nachfolgenden Zeitabschnitt verwendet werden soll, ist das Entscheidungsglied eingerichtet, die beiden Ausgabestellgrößen und den auszugebenden I-Anteil gemäß nachfolgenden Entscheidungsregeln festzulegen:

Falls sowohl die erste Stellgröße als auch die zweite Stellgröße größer null sind, wird die erste Ausgabestellgröße auf den Wert der ersten Stellgröße, die zweite Ausgabestellgröße auf null und der I-Anteil auf den Ausgangswert des Integrierglieds des ersten Reglers gesetzt. Falls sowohl die erste Stellgröße als auch die zweite Stellgröße kleiner null sind, wird die erste Ausgabestellgröße auf null, die zweite Ausgabestellgröße auf den Wert der zweiten Stellgröße und der I-Anteil auf den Ausgangswert des Integrierglieds des zweiten Reglers gesetzt. Falls die erste Stellgröße kleiner null ist und die zweite Stellgröße größer null ist, werden die erste Ausgabestellgröße und die zweite Ausgabestellgröße auf null gesetzt. Der Regler ist so ausgebildet, dass der Fall, dass die erste Stellgröße größer null ist und die zweite Stellgröße kleiner null ist, nicht auftreten kann. Hierzu sieht die Erfindung vorzugsweise vor, dass die Kennlinien zur Bestimmung der ersten und zweiten Sollgeschwindigkeit so vorgegeben werden, dass die erste Sollbeschleunigung kleiner oder kleiner gleich der zweiten Sollbeschleunigung ist und/oder dass ein in Abhängigkeit von einer Ist-Geschwindigkeit des Fahrzeugs bestimmter Wert der ersten Sollbeschleunigung stets kleiner als oder kleiner gleich einem in Abhängigkeit von der Ist-Geschwindigkeit bestimmten Wert der zweiten Sollbeschleunigung ist.

Der erfindungsgemäße Aufbau des Reglers gewährleistet somit, dass nicht nur eine Sollbeschleunigung von dem Regler verarbeitet wird, sondern zwei Sollbeschleunigungen, welche von einem einzigen Regler eingestellt werden, wodurch der Regler als zentraler Beschleunigungsregler für sowohl verzögernde als auch antreibende Aktuatoren verwendet werden kann. Ein besonderer Vorzug des erfindungsgemäßen Ansatzes ist, dass aufgrund der Verarbeitung der beiden Sollbeschleunigungen durch einen Regler die eingangs erwähnte Neuinitialisierung und damit der Verlust der bisher gelernten I-Anteile vermieden werden kann, wodurch der Fahrkomfort erhöht wird. Der Regler ermöglicht es insbesondere, dass immer nur ein Moment von den antreibenden bzw. von den verzögernden Aktuatoren angefordert wird, so dass nicht Motor gegen Bremse gefahren wird und dass im Übergangsbereich von antreibenden zu verzögernden Aktuatoren nicht mehrere Regler gleichzeitig arbeiten.

Gemäß einem bevorzugten Ausführungsbeispiel wird das Entscheidungsglied wieder mit dem I-Anteil des vorherigen Zeitschritts beaufschlagt, d. h., dem Entscheidungsglied wird als Eingangsgröße wieder der im Entscheidungsglied im letzten Zeitschritt ermittelte I-Anteil zugeführt. Der ganze Regler ist zeitdiskret dargestellt und nicht kontinuierlich, d. h., die einzelnen diskreten Zeitschritte entsprechen den einzelnen Berechnungszyklen des Reglers, die wiederholt durchlaufen werden.

Ferner ist das Entscheidungsglied gemäß diesem Ausführungsbeispiel eingerichtet, für den Fall, dass die erste Stellgröße kleiner null ist und die zweite Stellgröße größer null ist, den auszugebenden I-Anteil, der für die Berechnung im nächsten Zeitschritt verwendet wird, gemäß folgenden Entscheidungsregeln auszuwählen:

Falls die Ist-Beschleunigung kleiner als die erste Sollbeschleunigung ist, wird der Ausgangswert des Integrierglieds des ersten Regelzweigs als I-Anteil ausgegeben. Falls die Ist-Beschleunigung größer als die zweite Sollbeschleunigung ist, wird der Ausgangswert des Integrierglieds des zweiten Regelzweigs als I-Anteil ausgegeben. Falls die Ist-Beschleunigung größer als die erste Sollbeschleunigung und kleiner als die zweite Sollbeschleunigung ist, wird der I-Anteil des vorherigen Zeitschritts unverändert als I-Anteil ausgegeben, d. h., im Übergangsbereich des Reglers wird der I-Anteil gehalten.

Gemäß diesem Ausführungsbeispiel kann der I-Anteil für den nachfolgenden Berechnungsschritt korrigiert werden, was insbesondere bei großen Übergangsbereichen und/oder wenn eine verwendete Vorsteuerung nicht sehr genau ist, vorteilhaft ist.

Darüber hinaus sieht die Erfindung vorzugsweise vor, dass der Verstärkungsparameter k_P des ersten Proportionalgliedes den gleichen Wert wie der Verstärkungsparameter k_P des zweiten Proportionalgliedes aufweist und dass der Verstärkungsparameter K_I des ersten Integriergliedes den gleichen Wert wie der Verstärkungsparameter K_I des zweiten Integriergliedes aufweist. Mit anderen Worten sind die korrespondierenden Faktoren k_P und K_I im verzögernden und antreibenden Zweig des Reglers identisch.

Die Werte der Verstärkungsparameter K_P und K_I können, müssen aber nicht, zeitlich variieren. Sie können beispielsweise je nach aktivem Aktuator oder Geschwindigkeitsbereich variiert werden. Jedoch sind sie, wie vorstehend beschrieben, je Zeitschritt des zeitdiskret dargestellten Reglers für beide Pfade identisch, so dass für den aktuellen Zeitschritt der Faktor k_P im verzögernden und antreibenden Zweig des Reglers jeweils den gleichen Wert aufweist und der Faktor k_I im verzögernden und antreibenden Zweig des Reglers jeweils den gleichen Wert aufweist.

Es ist ferner vorteilhaft, eine Vorsteuerung zu verwenden, so dass der I-Anteil des Reglers weniger ausregeln muss. Gemäß diesem Aspekt wird der erste Regelzweig mit einer ersten Vorsteuerung und der zweite Regelzweig mit einer zweiten Vorsteuerung beaufschlagt. Hierbei werden die erste und die zweite Vorsteuerung jeweils mit der gleichen Berechnungsvorschrift in Abhängigkeit von einer Sollbeschleunigung bestimmt, mit dem Unterschied, dass bei der ersten Vorsteuerung die erste Sollbeschleunigung und bei der zweiten Vorsteuerung die zweite Sollbeschleunigung als Sollbeschleunigung in die Berechnungsvorschrift eingeht.

Gemäß einem hervorgehobenen Ausführungsbeispiel wird die erste Sollbeschleunigung in Abhängigkeit von einer Geschwindigkeitsdifferenz einer Ist-Geschwindigkeit des Fahrzeugs zu einer ersten Setzgeschwindigkeit, z. B. unter Verwendung einer Kennlinie, bestimmt. Die erste Setzgeschwindigkeit ist beispielsweise die gemäß der Fahrerwunschgeschwindigkeit eingestellte Setzgeschwindigkeit der Tempopilotfunktion des Fahrzeugs. Die zweite Sollbeschleunigung kann analog in Abhängigkeit von einer Geschwindigkeitsdifferenz der Ist-Geschwindigkeit zu einer zweiten Setzgeschwindigkeit, z. B. mittels einer Kennlinie, bestimmt werden, wobei die zweite Setzgeschwindigkeit über einen Offsetwert (Spreizung) mit der ersten Setzgeschwindigkeit in Zusammenhang steht. Hierbei werden die Kennlinien vorzugsweise so vorgegeben, dass die bestimmte erste Sollbeschleunigung kleiner als oder kleiner gleich der zweite Sollbeschleunigung ist, d. h., gemäß dieser Variante ist die einer Ist-Geschwindigkeit zugeordnete erste Sollbeschleunigung kleiner als oder zumindest kleiner gleich der zweiten Sollbeschleunigung.

Eine Möglichkeit der erfindungsgemäßen Realisierung sieht vor, dass die erste und/oder die zweite Sollbeschleunigung in einer vorgelagerten Funktion gebildet werden. Hierbei können mehrere Fahrdynamikfunktionen wie ein Tempopilot (Tempomat®), ein Bremsomat, eine automatische Distanzregelung (ADR, engl. Adaptive Cruise Control (ACC)) oder eine Aufbauerschnittstelle eine Beschleunigungsvorgabe machen. Bei einer Aufbauerschnittstelle bedient ein Aufbauer des Fahrzeugs (z. B. Kehrmaschinenhersteller) die Schnittstelle. Dadurch kann ein Dritter das Fahrzeug beschleunigen (z. B. mittels Fernbedienung von außen). Das ist insbesondere im niedrigen Geschwindigkeitsbereich von Interesse.

Gemäß diesem Aspekt kann die erste Sollbeschleunigung als Minimum der über die Fahrdynamikeinrichtungen des Fahrzeugs von dem wenigstens einen antreibenden Aktuator angeforderten Sollbeschleunigungen bestimmt werden. Ferner kann die zweite Sollbeschleunigung (a_EB) als Minimum der über die Fahrdynamikeinrichtungen des Fahrzeugs von dem wenigstens einen verzögernden Aktuator angeforderten Sollbeschleunigungen bestimmt werden.

Gemäß einer weiteren bevorzugten Ausführungsform des Reglers können die Integrierglieder eine Anti-Windup-Funktionalität aufweisen. Die Erfindung betrifft ferner ein Kraftfahrzeug, insbesondere ein Nutzfahrzeug, mit einem Regler wie in diesem Dokument offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:

Figur 1    den geschwindigkeitsabhängigen Verlauf der Sollbeschleunigungen einer Tempopilot- und Bremsomatfunktion gemäß einer Ausführungsform;

Figur 2    einen Regler gemäß einer Ausführungsform der Erfindung; und

Figur 3    ein Flussdiagramm gemäß einer Ausführungsform der Erfindung zur Illustration der Entscheidungsregeln des Entscheidungsglieds.

Der erfindungsgemäße zentrale Beschleunigungsregler hat zum Ziel, dass nicht nur eine Sollbeschleunigung von dem Regler verarbeitet wird, sondern zwei Sollbeschleunigungen, welche somit von einem einzigen Regler eingestellt werden. Dazu sendet der Regler eine Momentenanforderung an den/die antreibenden Aktuatoren (z. B. Verbrennungsmotor) und eine Momentenanforderung an den/die verzögernden Aktuatoren (z. B. Dauerbremsen, wie geregelte Motorbremse, Pritarder, Sekundärretarder).

Eine erste von dem Regler verarbeitete Sollbeschleunigung a_Eng gilt für die antreibenden Aktuatoren, und eine zweite von dem Regler verarbeitete Sollbeschleunigung a_EB gilt somit für die verzögernden Aktuatoren. Die Sollbeschleunigungen a_Eng und a_EB werden in einer vorgelagerten Funktion gebildet. Hierbei können unter anderem Funktionen wie Tempopilot, Bremsomat, ACC oder Aufbauerschnittstelle eine Vorgabe machen.

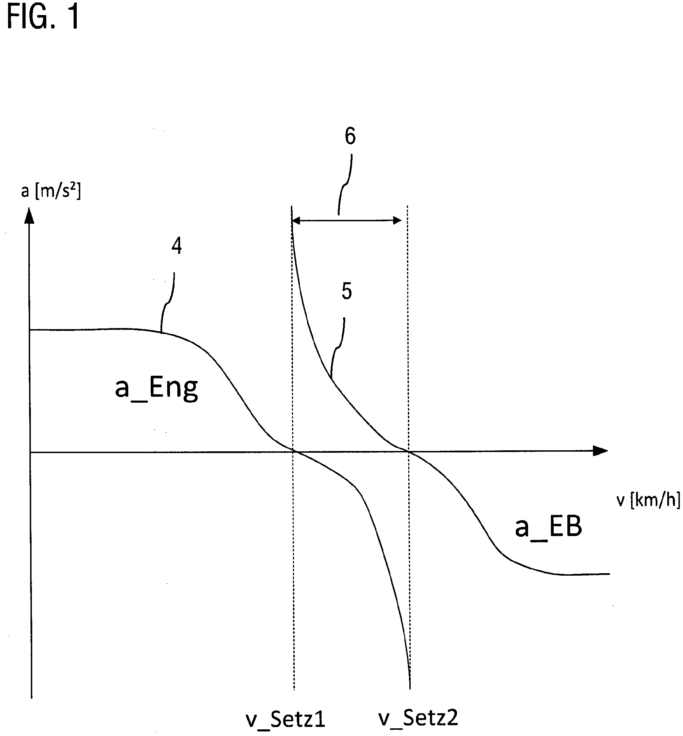

Figur 1 illustriert die Vorgabe der zwei Sollbeschleunigungen a_Eng und a_EB am Beispiel eines Tempopiloten und Bremsomaten. Beim Tempopiloten wird mittels einer Kennlinie eine Beschleunigung a_Eng, dargestellt durch die Kurve 4, in Abhängigkeit von der Geschwindigkeitsdifferenz der Ist-Geschwindigkeit des Fahrzeugs zur Tempopilotsetzgeschwindigkeit v_Setz1 gebildet. Ebenso wird für den Bremsomat eine Beschleunigung a_EB, dargestellt durch die Kurve 5, in Abhängigkeit von der Geschwindigkeitsdifferenz zur Bemsomatsetzgeschwindigkeit v_Setz2, welche immer eine Spreizung von z. B. 4 km/h größer als die Tempopilotsetzgeschwindigkeit aufweist, gebildet. Der Tempopilot fordert nur die Sollbeschleunigung a_Eng an und der Bremsomat nur die Sollbeschleunigung a_EB an, wobei auf Grund der Geschwindigkeitsspreizung zwischen Tempopilot und Bremsomat a_Eng < a_EB gilt.

Bei der automatischen Distanzregelung (ADR) fordert diese in Folgefahrt sowohl eine erste Sollbeschleunigung von dem antreibenden Aktuator als auch eine zweite Sollbeschleunigung von dem verzögernden Aktuator an, wobei in Situationen, in denen die Beschleunigung sehr genau eingestellt werden muss, die beiden Sollgeschwindigkeiten auch gleich sein können. In anderen Situationen können die beiden Sollbeschleunigungen allerdings auch hier durch die automatische Distanzregelung so vorgegeben werden, dass die erste Sollbeschleunigung kleiner als die zweite Sollbeschleunigung ist. Dies kann zu einem Eintauchen zum Folgefahrzeug führen, verringert allerdings die Häufigkeit von Wechseln zwischen beschleunigenden und verzögernden Aktuatoren. Dadurch kann die ADR die Hysterese beim Wechsel zwischen Antriebs- und Bremsbetrieb beeinflussen, ohne eine Kenntnis von wirkenden Kräften der Fahrzeuglängsdynamik wie z. B. vom Fahrwiderstand haben zu müssen.

Beliebige weitere Funktionen können über die beiden Sollbeschleunigungen die Beschleunigung des Fahrzeugs bestimmen, ohne dass eine Kenntnis der Längsdynamik des Fahrzeugs in den anfordernden Funktionen notwendig ist.

Gemäß dem vorliegenden Ausführungsbeispiel wird aus den Sollbeschleunigungen von den anfordernden Funktionen eine Sollbeschleunigung a_Eng für den Regler aus dem Minimum der anfordernden Funktionen, welche eine Sollbeschleunigung vom antreibenden Aktuator fordern, gebildet. Genauso wird die Sollbeschleunigung a_EB aus dem Minimum der anfordernden Funktionen, welche eine Sollbeschleunigung von dem verzögernden Aktuator fordern, gebildet.

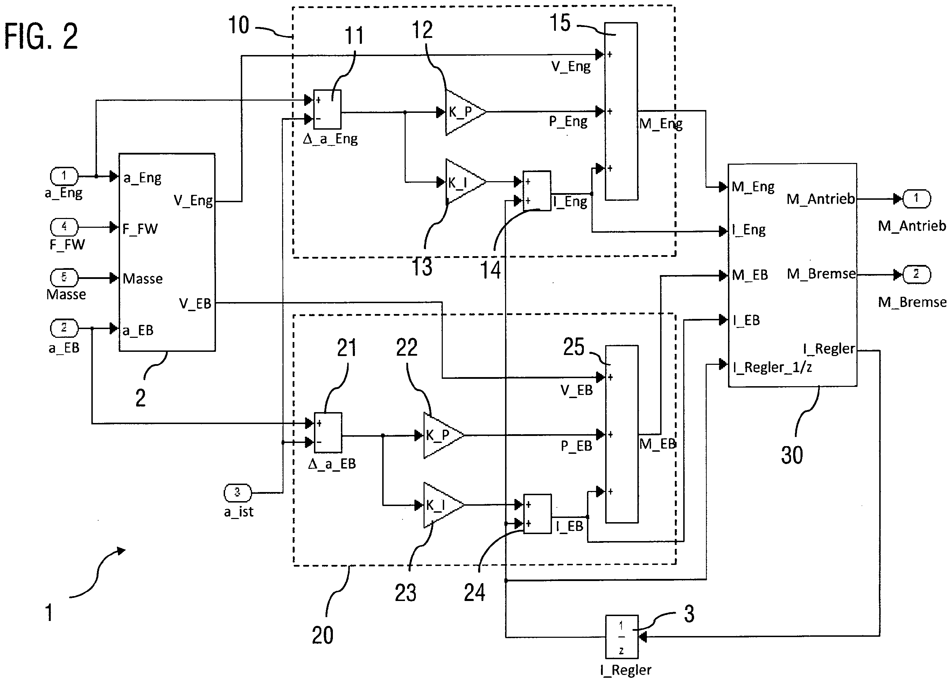

In Figur 2 ist ein Aufbau des Reglers 1, der als zentraler Beschleunigungsregler dient, vereinfacht dargestellt.

Als Eingangsgrößen dienen die Sollgrößen a_Eng (erste Sollbeschleunigung), a_EB (zweite Sollbeschleunigung), die einzuregelnde Ist-Beschleunigung a_ist und die momentane Fahrwiderstandskraft F_FW sowie die Masse des Fahrzeugs.

Als Ausgangsgrößen gibt der Regler 1 die Stellgröße M_Antrieb, die das vom antreibenden Aktuator (z. B. Verbrennungsmotor) angeforderte Antriebsmoment angibt, sowie die Stellgröße M_Bremse, die das vom verzögernden Aktuator (z. B. Dauerbremse) angeforderte Bremsmoment angibt, aus.

Der Regler 1 umfasst einen ersten Regelzweig 10, der ein erstes Integrierglied 13, 14 und ein erstes Proportionalglied 12 umfasst. Der Regler 1 umfasst ferner einen zweiten Regelzweig 20, der ein zweites Integrierglied 23, 24 und ein zweites Proportionalglied 22 umfasst.

In einem ersten Schritt werden zwei Regeldifferenzen berechnet: Eine im ersten Regelzweig 10 berechnete erste Regeldifferenz gibt die Abweichung der ersten Sollbeschleunigung von der Ist_Beschleunigung an: Δa_Eng = a_Eng - ajst. Hierzu umfasst der erste Regelzweig 10 einen Differenzierer 11, der mit der ersten Sollbeschleunigung a_Eng und der Ist-Beschleunigung a_ist beaufschlagt wird.

Eine im zweiten Regelzweig 20 berechnete zweite Regeldifferenz gibt die Abweichung der zweiten Sollbeschleunigung von der Ist_Beschleunigung an: Δa_EB = a_EB - a_ist. Hierzu umfasst der zweite Regelzweig 20 einen Differenzierer 21, der mit der ersten Sollbeschleunigung a_Eng und der Ist-Beschleunigung a_ist beaufschlagt wird.

Dann wird aus der berechneten Abweichung Δa_Eng mithilfe des Proportionalgliedes 12 und des Integriergliedes 13, 14 der P-Anteil P_Eng und der I-Anteil I_Eng des ersten Regelzweiges 10 berechnet. Gleichzeitig wird entsprechend aus der berechneten Abweichung Δa_EB mithilfe des Proportionalgliedes 22 und des Integriergliedes 23, 24 der P-Anteil P_EB und der I-Anteil P_EB des zweiten Regelzweiges 20 berechnet. Hierbei sind jeweils die Verstärkungsfaktoren K_P der Integrierglieder für den ersten (antreibenden) Zweig 10 und den zweiten (verzögernden) Zweig 20 identisch. Ferner sind die Verstärkungsfaktoren K_I der beiden Integrierglieder 13, 23 identisch.

Der P-Anteil und der I-Anteil des antreibenden Regelzweigs 10 werden durch die folgenden Formeln berechnet:

$$(\text{Formel 1a}) \qquad P\_Eng = K\_P * (a\_Eng - a\_ist) = K\_P * \Delta a\_Eng,$$

$$(\text{Formel 1b}) \qquad I\_Eng = K\_I* (a\_Eng - a\_ist) + z\text{-}1 \, (I\_Regler).$$

Folglich werden der P-Anteil P_EB und der I-Anteil I_EB des verzögernden Regelzweigs entsprechend durch die folgenden Formeln berechnet:

$$\text{(Formel 2a)} \qquad P\_EB = K\_P * (a\_EB - a\_ist) = K\_P * \Delta a\_EB,$$

$$\text{(Formel 2b)} \qquad I\_EB = K\_I* (a\_EB - a\_ist) + z\text{-}1 \, (I\_Regler)$$

Die Faktoren K_P und K_I werden jedoch verändert, je nachdem, welcher Aktuator gerade wirkt. Dies ist notwendig, da die Aktuatoren ein unterschiedliches Streckenverhalten aufweisen. Sie können bei Bedarf evtl. auch noch auf Grund anderer Randbedingungen angepasst werden (dynamisches vs. komfortables Verhalten, Zustand des Aktuators wie z. B. Motordrehzahl usw.). Der I-Anteil ist mit einer Anti-Windup-Funktion versehen, d. h., er wird z. B. bei einem Schaltvorgang eingefroren und, wenn das maximal zu Verfügung stehende Antriebsmoment erreicht ist, nach oben begrenzt bzw. nach unten begrenzt, wenn das das maximal zu Verfügung stehende Bremsmoment erreicht ist. Außerdem kann über den Anti-Windup eine Gradientenbegrenzung der ansteuernden Momente umgesetzt werden, um den jeweiligen Aktuator in seinem maximal möglichen Dynamikbereich oder mit einer begrenzten Dynamik anzusteuern, um zu gewährleisten, dass z. B. das Fahrverhalten komfortabel empfunden wird bzw. um den Aktuator in einem energiesparenden Bereich anzusteuern.

Der berechnete P-Anteil und I-Anteil des ersten Regelzweigs 10 werden einem Addierer 15 des ersten Regelzweigs 10 zugeführt. Ebenso werden der berechnete P-Anteil und I-Anteil des zweiten Regelzweigs 20 einem Addierer 25 des zweiten Regelzweigs 20 zugeführt.

Der Regler 1 umfasst ferner eine Vorsteuerungsberechnungseinheit 2, die eine erste Vorsteuerung V_Eng für den ersten Regelzweig 10 und eine zweite Vorsteuerung V_EB für den zweiten Regelzweig 20 berechnet.

Die Vorsteuerung V_Eng wird auf Basis der Sollbeschleunigung a_Eng und die Vorsteuerung V_EB auf Basis der zweiten Sollbeschleunigung a_EB berechnet. Die Vorsteuerung wird in beiden Fällen jedoch durch die gleiche Formel berechnet, in die die Differenz aus Beschleunigungskraft F = m * a und geschätzter, variabler Fahrwiderstandskraft F_FW eingeht. Die Beschleunigungskraft ergibt sich aus der Fahrzeugmasse m und der Sollbeschleunigung, also entweder a_Eng oder a_EB. Die Fahrwiderstandskraft ergibt sich in an sich bekannter Weise abhängig von der aktuellen Steigung, dem Luftwiderstand, etc.. Die Genauigkeit der Vorsteuerung und damit deren exakte Berechnung ist nicht Gegenstand dieser Erfindung und daher nicht näher beschrieben. Es wird jedoch betont, dass die Vorsteuerungen V_Eng und V_EB mit derselben Formel berechnet werden - mit dem Unterschied, dass bei der ersten Vorsteuerung V_Eng die erste Sollbeschleunigung a_Eng zur Berechnung der Beschleunigungskraft F= m * a und bei der zweiten Vorsteuerung V_EB die zweite Sollbeschleunigung a_EB als Sollbeschleunigung in die Berechnungsvorschrift eingeht.

Die Vorsteuerung bietet den Vorteil, dass der I-Anteil des Reglers nicht so viel ausregeln muss. Die Vorsteuerung V_Eng wird ebenfalls dem Addierer 15 zugeführt, während die Vorsteuerung V_EB dem Addierer 25 zugeführt wird.

Nun ergibt sich durch Addition von P-Anteil, I-Anteil und Vorsteuerung in den Addierern 15, 25 aus jedem der beiden Regelzweige 10, 20 jeweils ein Kandidat für ein anzusteuerndes Moment. Es ergeben sich somit eine Momentenanforderung M_ENG = P_ENG + I_ENG + V_ENG für den antreibenden Aktuator als Ausgabegröße des ersten Addierers 15 und eine Momentenanforderung M_EB = P_EB + I_EB + V_EB für den verzögernden Aktuator als Ausgabegröße des zweiten Addierers 25.

Ebenso sind durch die zwei Ausgangswerte der Integrierglieder 14, 24 zwei Kandidaten I_Eng und I_EB für den abzuspeichernden I-Anteil des Reglers 1 verfügbar. Diese Größen M_ENG, M_EB, I_Eng und I_EB werden einem Entscheidungsglied 30 zugeführt.

Das Entscheidungsglied 30 ist eingerichtet, eine erste Ausgabestellgröße M_Antrieb als Momentenanforderung an den antreibenden Aktuator und eine zweite Ausgabestellgröße M_Bremse als Momentenanforderung an den verzögernden Aktuator auszugeben sowie einen I-Anteil I_Regler auszugeben, mit dem jeweils das erste und das zweite Integrierglied 14, 24 im nächsten Berechnungsschritt beaufschlagt werden. In Figur 2 ist erkennbar, dass der vom Entscheidungsglied ausgegebene I-Anteil einem Integrator bzw. Speicherglied 3 zugeführt wird, der/das den aktuellen Wert des I-Anteils zwischenspeichert und diesen wieder den Integriergliedern 14, 24 sowie dem Entscheidungsglied 30 als Eingangsgröße I_Regler_1/z zuführt, wo der I-Anteil im nächsten Berechnungsschritt verarbeitet wird.

Über den Regler 1 soll immer nur ein Moment von den antreibenden bzw. von den verzögernden Aktuatoren angefordert werden, d. h., es soll nicht Motor gegen Bremse gefahren werden. Wie in Figur 2 dargestellt, ist das Entscheidungsglied 30 hierzu eingerichtet, gemäß den folgenden Regeln zu entscheiden, welcher der beiden Momente an den Aktuator geschickt wird und welcher I-Anteil für die Berechnung im nächsten Zeitschritt gespeichert wird:

Falls sich in Schritt S31 ergibt, dass sowohl die erste Stellgröße M_Eng als auch die zweite Stellgröße M_EB größer null sind (Fall 1), d. h., beide Momente wollen beschleunigen, setzt das Entscheidungsglied 30 in Schritt S32 die erste Ausgabestellgröße M_Antrieb auf den Wert der ersten Stellgröße M_Eng, die zweite Ausgabestellgröße M_Bremse auf null und den I-Anteil auf den Ausgangswert des Integrierglieds 13, 14 des ersten Reglers 10, d. h., I_Eng wird gespeichert und im nächsten Rechenzyklus verwendet.

Das Entscheidungsglied 30 setzt in Schritt S34 die erste Ausgabestellgröße M_Antrieb auf null, die zweite Ausgabestellgröße M_Bremse auf den Wert der zweiten Stellgröße M_EB und den I-Anteil auf den Ausgangswert des Integrierglieds 23, 24 des zweiten Reglers 20 (d. h. I_EB wird gespeichert und im nächsten Rechenzyklus verwendet), falls sich in Schritt S33 ergibt, dass sowohl die erste Stellgröße M_Eng als auch die zweite Stellgröße M_EB kleiner null sind (Fall 2), d. h. ,beide Momente wollen verzögern.

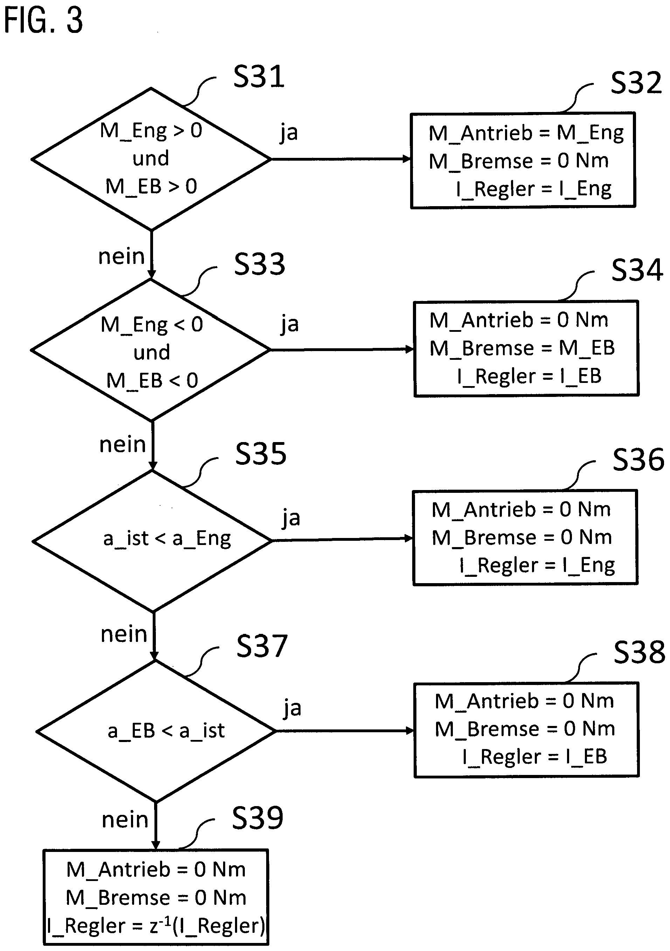

Falls die erste Stellgröße M_Eng jedoch kleiner null und die zweite Stellgröße M_EB größer null ist (Fall 3), d. h. der antreibende Aktuator soll verzögern und der verzögernde Aktuator soll beschleunigen (dies entspricht dem Übergangsbereich 6 zwischen a_Eng und a_EB in Figur 1), dann setzt das Entscheidungsglied 30 die erste Ausgabestellgröße M_Antrieb und die zweite Ausgabestellgröße M_Bremse jeweils auf null (siehe Schritte S36, S38 und S39 in Figur 3).

Für den I-Anteil wird davon ausgegangen, dass der Übergangsbereich zwischen a_Eng und a_EB nicht zu groß ist und sich damit der Fehler der Vorsteuerung, der dem I-Anteil entspricht, nicht allzu sehr ändert. Sollte der Übergangsbereich sehr groß sein, sollte er korrigiert werden, insbesondere wenn die Vorsteuerung V_Eng bzw. V_EB nicht genau genug ist.

Diese Korrektur erfolgt somit in dem Fall, dass die erste Stellgröße M_Eng kleiner null ist und die zweite Stellgröße M_EB größer null ist, wobei das Entscheidungsglied 30 in diesem Fall mit dem Wert (I_Regler_1/z) des I-Anteils des vorherigen Zeitschritts, d. h. dem I-Anteil, den das Entscheidungsgleid 30 im vorherigen Zeitschritt ausgegeben hat, beaufschlagt wird. Die Korrektur des I-Anteils erfolgt gemäß folgenden Regeln:

Falls die Ist-Beschleunigung a_ist kleiner als die erste Sollbeschleunigung a_Eng ist (Schritt S35), wird der Ausgangswert des Integrierglieds 13, 14 des ersten Reglers 10 als I-Anteil ausgegeben, d. h. I_Regler = I_Eng (Schritt S36). Falls die Ist-Beschleunigung a_ist größer als die zweite Sollbeschleunigung a_EB ist (Schritt 37), wird der Ausgangswert des Integrierglieds 23, 24 des zweiten Reglers 20 als I-Anteil ausgegeben, d. h. I_Regler = I_EB. Falls die Ist-Beschleunigung größer als die erste Sollbeschleunigung a_Eng und kleiner als die zweite Sollbeschleunigung a_EB ist, wird der Wert des I-Anteils des vorherigen Berechnungsschritt ausgegeben, d. h., der Integralanteil wird im Übergangsbereich des Reglers unverändert gelassen (Schritt S39). Der Wert des I-Anteils des vorherigen Berechnungsschritts ist mit $z^{-1}$ ($I_{Regler}$) bezeichnet.

Unter der Annahme, dass a_Eng < a_EB gilt, entsprechen die Entscheidungsregeln den folgenden Formeln:

(Formel 3a): $I_{Regler} = z^{-1}$ ($I_{Regler}$), wenn a_ENG < a_ist < a_EB, d. h. I_Eng < $z^{-1}$ ($I_{Regler}$) < I_EB

(Formel 3b): $I_{Regler}$ = I_ENG, wenn a_ist < a_Eng < a_EB, d. h. $z^{-1}$ ($I_{Regler}$) < I_Eng (< I_EB)

(Formel 3c): $I_{Regler}$ = I_EB, wenn a_Eng < a_EB < a_Ist, d. h. (I_Eng <) I_EB < $z^{-1}$ ($I_{Regler}$)

Der vierte Fall, bei dem die erste Sollgröße M_Eng > 0 und die zweite Sollgröße M_EB < 0 wäre, d. h. M_EB < 0 < M_Eng, kann nicht auftreten, da die erste Sollbeschleunigung kleiner als die zweite Sollbeschleunigung ist (a_Eng < a_EB). Dies liegt daran, dass, wie vorstehend erwähnt, einerseits die Vorsteuerungen V_Eng und V_EB mit gleicher Formel berechnet werden, mit dem Unterschied, dass bei der ersten Vorsteuerung V_Eng die erste Sollbeschleunigung a_Eng und bei der zweiten Vorsteuerung V_EB die zweite Sollbeschleunigung a_EB als Sollbeschleunigung in die Formel eingeht. Da die erste Sollbeschleunigung a_Eng kleiner als die zweite Sollbeschleunigung a_EB ist, ergibt sich folglich, dass V_Eng kleiner als V_EB ist (V_ENG < V_EB). Ferner ist P_Eng < P_EB, da K_P identisch in den Formeln 1a und 2a ist und ferner Δa_Eng < Δa_EB ist. Schließlich ist I_Eng < I_EB, da K_I identisch in den Formeln 1b und 2b und Δa_Eng < Δa_EB ist. Da sich die Sollgröße als Summe aus Vorsteuerung, P-Anteil und I-Anteil (M = V + P + I) ergibt, folgt M_Eng < M_EB. Dies ist ein Widerspruch zu dem vierten Fall M_EB < 0 < M_Eng, der somit nicht auftreten kann.

Am Fall 4 sieht man, dass es wichtig für die Erfindung ist, dass die Verstärkungsfaktoren K_P für beide Regelzweige 10, 20 und die Verstärkungsfaktoren K_I für beide Regelzweige 10, 20 identisch sind und die Vorsteuerung, falls eingesetzt, jeweils mit derselben Formel berechnet wird. Dadurch ist es möglich, dass ein Regler 1 entsteht, obwohl zwei Sollbeschleunigungen a_Eng und a_EB für den antreibenden und für den verzögernden Aktuator gleichzeitig vorgegeben werden. Ferner wird durch a_Eng < a_EB gewährleistet, dass nicht Motor gegen Bremse gefahren wird.

Je größer die Differenz zwischen a_Eng und a_EB ist, desto länger wird sich der Regler 1 beim Übergang zwischen Antrieb und Bremse im Übergangsbereich 6 befinden, d. h., die erste Stellgröße M_Eng ist kleiner null und die zweite Stellgröße M_EB ist größer null. Damit haben die ansteuernden Funktionen die Möglichkeit, das potentiell unkomfortable Umschalten zwischen Antriebs- und Bremsbetrieb zu minimieren, wenn dadurch Abweichungen in der Sollbeschleunigung hingenommen werden können. Wenn sich in diesem Bereich allerdings auf Grund von Störgrößenänderungen (z. B. Topologie, Wind) das anzusteuernde Moment stark ändert, ist beim Verlassen des Übergangsbereichs davon auszugehen, dass sich der I-Anteil erst einschwingen muss und damit kurzfristig ein Regelfehler entsteht. Dies ist allerdings nicht so relevant, wenn der Bereich groß gewählt wird, da in diesem Fall sowieso ein breites Band in der Beschleunigung zulässig ist.

Nachfolgend wird die Arbeitsweise des Reglers 1 nochmals anhand eines Beispiels illustriert. Es soll als Beispiel ein Tempopilot mit Setzgeschwindigkeit 85 km/h und ein Bremsomat mit einer Setzgeschwindigkeit von 4 km/h (Spreizung 4 km/h) dargestellt werden. Die Sollbeschleunigung wird jeweils in Abhängigkeit von der Differenzgeschwindigkeit bestimmt.

Als Beispiel für den vorstehend genannten Fall 1 wird folgende Ausgangssituation angenommen: Die Ist-Geschwindigkeit liegt unter der ersten Setzgeschwindigkeit von 85 km/h des Tempopiloten; die aktuelle Beschleunigung a_ist ist 0 m/s^2; das aktuelle Moment des antreibenden Aktuators M_Eng ist größer null und das des verzögernden Aktuators ist 0 Nm, d. h., es liegt ein Motorbetrieb vor. Ferner ist die momentan angeforderte erste Sollbeschleunigung größer null (a_Eng > 0 m/s^2), und die momentan angeforderte zweite Sollbeschleunigung ist ebenfalls größer null (a_EB > 0 m/s^2).

Folglich ermittelt der Differenzierer 11 im aktuellen Berechnungszeitpunkt einen Wert für die Regelabweichung $\Delta a\_Eng > 0$ und der Differenzierer 21 einen Wert für die Regelabweichung $\Delta a\_EB > 0$. Bei beiden Regelzweigen wird somit das geforderte Moment erhöht, so dass die bestimmten Werte für M_Eng und M_EB jeweils größer null sind (M_Eng > 0 und M_EB > 0). Folglich wird gemäß den Schritten S31 und S32 der erste Ausgabesollwert M_Antrieb auf den Wert von M_Eng gesetzt und der zweite Ausgabesollwert M_Bremse auf 0 Nm. Der vom Entscheidungsglied 30 auszugebende I-Anteil wird auf I_Regler = I_Eng gesetzt und ausgegeben.

Als Beispiel für den vorstehend genannten Fall 2 wird folgende Ausgangssituation angenommen: Die Ist-Geschwindigkeit liegt über der zweiten Setzgeschwindigkeit von 89 km/h des Bremsomaten und beträgt z. B. 94 km/h; die aktuelle Beschleunigung a_ist ist 0 m/s^2; das aktuelle Moment des antreibenden Aktuators M_Eng ist 0 Nm und das des verzögernden Aktuators ist kleiner null, d. h., es liegt somit ein Bremsbetrieb vor. Ferner soll die momentan angeforderte erste Sollbeschleunigung kleiner null (a_Eng < 0 m/s^2) und die momentan angeforderte zweite Sollbeschleunigung ebenfalls kleiner null (a_EB < 0 m/s^2) sein.

Folglich ermittelt der Differenzierer 11 im aktuellen Berechnungszyklus einen Wert für $\Delta a\_Eng < 0$ und der Differenzierer 21 einen Wert für $\Delta a\_EB < 0$. Bei beiden Regelzweigen 10, 20 wird somit das geforderte Moment verringert, so dass die bestimmten Werte für M_Eng und M_EB jeweils kleiner null sind (M_Eng < 0 und M_EB < 0). Folglich wird gemäß den Schritten S33 und S34 der erste Ausgabesollwert M_Antrieb auf null gesetzt und der zweite Ausgabesollwert M_Bremse auf den Wert M_EB. Der auszugebende I-Anteil wird auf I_Regler = I_EB gesetzt und ausgegeben.

Als Beispiel für den vorstehend genannten Fall 3 wird folgende Ausgangssituation angenommen: Die Ist-Geschwindigkeit liegt im Übergangsbereich 6 zwischen 85 km/h und 89 km/h, d. h. zwischen den beiden Setzgeschwindigkeiten; die aktuelle Beschleunigung a_ist ist 0 m/s^2; das aktuelle Moment des antreibenden Aktuators M_Eng ist 0 Nm, und das des verzögernden Aktuators beträgt ebenfalls 0 Nm. Es liegt somit weder ein Motor- noch Bremsbetrieb vor, sondern eine Fahrsituation im Übergangsbereich 6. Ferner ist die momentan angeforderte erste Sollbeschleunigung kleiner null (a_Eng < 0 m/s^2) und die momentan angeforderte zweite Sollbeschleunigung ist größer null (a_EB > 0 m/s^2).

Folglich ermittelt der Differenzierer 11 im aktuellen Berechnungszyklus einen Wert für $\Delta a\_Eng < 0$ und der Differenzierer 21 einen Wert für $\Delta a\_EB > 0$. Bei dem Regelzweig 10 des antreibenden Aktuators wird das geforderte Moment verringert (M_Eng < 0). Bei dem Regelzweig des verzögernden Aktuators wird das geforderte Moment erhöht (M_EB > 0).

Folglich wird gemäß den Schritten S35 bis S39 sowohl der erste Ausgabesollwert M_Antrieb als auch der zweite Ausgabesollwert M_Bremse auf null gesetzt. Der I-Anteil kann unverändert bleiben.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

**Bezugszeichenliste**

| | |
|---|---|
| 1 | Regler |
| 2 | Vorsteuerungsberechnungseinheit |
| 3 | Speicherglied zur Speicherung des aktuellen Wert des I-Anteils I_Regler |
| 4 | Verlauf der ersten Sollbeschleunigung a_Eng |
| 5 | Verlauf der zweiten Sollbeschleunigung a_EB |
| 6 | Übergangsbereich |
| 10 | Antreibender Zweig |
| 11 | Differenzierer |
| 12 | Proportionalglied |
| 13, 14 | Integrierglied |
| 15 | Summierer |
| 20 | Verzögernder Zweig |
| 21 | Differenzierer |
| 22 | Proportionalglied |
| 23, 24 | Integrierglied |
| 25 | Summierer |
| 30 | Entscheidungsglied |
| a_ist | Ist-Beschleunigung |
| a_Eng | Sollbeschleunigung für antreibenden Aktuator |
| a_EB | Sollbeschleunigung für verzögernden Aktuator |
| V_Eng | Vorsteuerung für antreibenden Zweig |
| V_EB | Vorsteuerung für verzögernden Zweig |
| P_Eng | P-Anteil antreibender Zweig |
| P_EB | P-Anteil verzögernder Zweig |
| I_Eng | I-Anteil antreibender Zweig |
| I_EB | I-Anteil verzögernder Zweig |
| M_Eng | Erste Stellgröße |
| M_EB | Zweite Stellgröße |
| M_Antrieb | Ausgabesollgröße an antreibenden Aktuator |
| M_Bremse | Ausgabesollgröße an verzögernden Aktuator |
| I_Regler | I-Anteil an verzögernden und antreibenden Zweig für nächsten Berechnungsschritt |
| F_FW | Fahrwiderstand |
| v_Setz1 | Setzgeschwindigkeit Tempopilot |
| v_Setz2 | Setzgeschwindigkeit Bremsomat |

**Patentansprüche**

**1.** Regler (1), insbesondere zur Regelung von Motor- und Dauerbremsanforderungen eines Kraftfahrzeugs, aufweisend

(a) einen ersten Regelzweig (10), der ein erstes Integrierglied (13, 14) und ein erstes Proportionalglied (12) umfasst, wobei der erste Regelzweig (10) mit einer ersten Sollbeschleunigung (a_Eng) für wenigstens einen antreibenden Aktuator und einer Ist-Beschleunigung (a_ist) beaufschlagt wird und eine erste Stellgröße (M_Eng) für den wenigstens einen antreibenden Aktuator ausgibt;

(b) einen zweiten Regelzweig (20), der ein zweites Integrierglied (23,24) und ein zweites Proportionalglied (22) umfasst, wobei der zweite Regelzweig (20) mit einer zweiten Sollbeschleunigung (a_EB) für wenigstens einen verzögernden Aktuator und der Ist-Beschleunigung (a_ist) beaufschlagt wird und eine zweite Stellgröße (M_EB) für den wenigstens einen verzögernden Aktuator ausgibt; und

(c) ein Entscheidungsglied (30), das mit der ersten und zweiten Stellgröße (M_Eng, M_EB) und den Ausgangswerten (I_Eng, I_EB) des ersten und zweiten Integrierglieds (13, 14, 23, 24) beaufschlagt wird und eine erste Ausgabestellgröße (M_Antrieb) als Momentenanforderung an den wenigstens einen antreibenden Aktuator, eine zweite Ausgabestellgröße (M_Bremse) als Momentenanforderung an den wenigstens einen verzögernden Aktuator und einen I-Anteil (I_Regler), mit dem jeweils das erste und das zweite Integrierglied (14, 24) in einem nachfolgenden Zeitschritt beaufschlagt wird, ausgibt, wobei

(c1) die erste Ausgabestellgröße (M_Antrieb) auf den Wert der ersten Stellgröße, die zweite Ausgabestellgröße (M_Bremse) auf null und der I-Anteil auf den Ausgangswert des Integrierglieds (13, 14) des ersten Regelzweigs (10) gesetzt wird, falls sowohl die erste Stellgröße (M_Eng) als auch die zweite Stellgröße (M_EB) größer null sind;

(c2) die erste Ausgabestellgröße (M_Antrieb) auf null, die zweite Ausgabestellgröße (M_Bremse) auf den Wert der zweiten Stellgröße (M_EB) und der I-Anteil auf den Ausgangswert des Integrierglieds (23, 24) des zweiten Regelzweigs (20) gesetzt wird, falls sowohl die erste Stellgröße (M_Eng) als auch die zweite Stellgröße (M_EB) kleiner null sind; und

(c3) die erste Ausgabestellgröße (M_Antrieb) und die zweite Ausgabestellgröße (M_Bremse) auf null gesetzt werden, falls die erste Stellgröße (M_Eng) kleiner null ist und die zweite Stellgröße (M_EB) größer null ist.

2. Regler (1) nach Anspruch 1, **dadurch gekennzeichnet, dass** das Entscheidungsglied (30) mit dem I-Anteil (I_Regler) des vorherigen Zeitschritts beaufschlagt wird und eingerichtet ist, falls die erste Stellgröße (M_Eng) kleiner null ist und die zweite Stellgröße (M_EB) größer null ist,

(a) den Ausgangswert des Integrierglieds (13, 14) des ersten Reglers (10) als I-Anteil auszugeben, falls die Ist-Beschleunigung (a_ist) kleiner als die erste Sollbeschleunigung (a_Eng) ist;

(b) den Ausgangswert des Integrierglieds (23, 24) des zweiten Reglers (20) als I-Anteil auszugeben, falls die Ist-Beschleunigung (a_ist) größer als die zweite Sollbeschleunigung (a_EB) ist; und

(c) den I-Anteil des vorherigen Zeitschritts als I-Anteil auszugeben, falls die Ist-Beschleunigung größer als die erste Sollbeschleunigung (a_Eng) und kleiner als die zweite Sollbeschleunigung (a_EB) ist.

3. Regler (1) nach Anspruch 1 oder 2, **dadurch gekennzeichnet,**

(a) **dass** der Verstärkungsparameter k_P des ersten Proportionalgliedes (12) den gleichen Wert wie der Verstärkungsparameter k_P des zweiten Proportionalgliedes (22) aufweist; und

(b) **dass** der Verstärkungsparameter K_I des ersten Integriergliedes (13) den gleichen Wert wie der Verstärkungsparameter K_I des zweiten Integriergliedes (23) aufweist.

4. Regler (1) nach einem der vorhergehenden Ansprüche, **dadurch gekennzeichnet, dass** ein in Abhängigkeit von einer Ist-Geschwindigkeit des Fahrzeugs bestimmter Wert der ersten Sollbeschleunigung (a_Eng) stets kleiner als oder kleiner gleich einem in Abhängigkeit von der Ist-Geschwindigkeit bestimmten Wert der zweiten Sollbeschleunigung (a_EB) ist.

5. Regler (1) nach einem der vorhergehenden Ansprüche, **dadurch gekennzeichnet, dass** der erste Regelzweig (10) mit einer ersten Vorsteuerung (V_Eng) und der zweite Regelzweig (20) mit einer zweiten Vorsteuerung (V_EB) beaufschlagt wird, wobei die erste und zweite Vorsteuerung jeweils mit der gleichen Berechnungsvorschrift in Abhängigkeit von einer Sollbeschleunigung bestimmt werden, mit dem Unterschied, dass bei der ersten Vorsteuerung (V_Eng) die erste Sollbeschleunigung (a_Eng) und bei der zweiten Vorsteuerung (V_EB) die zweite Sollbeschleunigung (a_EB) als Sollbeschleunigung in die Berechnungsvorschrift eingeht.

6. Regler (1) nach einem der vorhergehenden Ansprüche, **dadurch gekennzeichnet,**

(a) **dass** die erste Sollbeschleunigung (a_Eng) in Abhängigkeit von einer Geschwindigkeitsdifferenz einer Ist-Geschwindigkeit des Fahrzeugs zu einer ersten Setzgeschwindigkeit (v_Setz1) bestimmt wird, die in Abhängigkeit von einer ausgewählten Fahrerwunschgeschwindigkeit bestimmt wird; und

(b) **dass** die zweite Sollbeschleunigung (a_EB) in Abhängigkeit von einer Geschwindigkeitsdifferenz der Ist-Geschwindigkeit zu einer zweiten Setzgeschwindigkeit (V_Setz2) bestimmt wird, wobei die zweite Setzgeschwindigkeit über einen Offsetwert (Δ) mit der ersten Setzgeschwindigkeit (v_Setz1) in Zusammenhang steht.

7. Regler (1) nach einem der vorhergehenden Ansprüche, **dadurch gekennzeichnet,**

(a) **dass** die erste Sollbeschleunigung (a_Eng) als Minimum der von den Fahrdynamikeinrichtungen des Fahrzeugs von dem wenigstens einen antreibenden Aktuator angeforderten Sollbeschleunigungen bestimmt wird; und

(b) **dass** die zweite Sollbeschleunigung (a_EB) als Minimum der von den Fahrdynamikeinrichtungen des Fahrzeugs von dem wenigstens einen verzögernden Aktuator angeforderten Sollbeschleunigungen bestimmt wird.

8. Regler (1) nach einem der vorhergehenden Ansprüche, **dadurch gekennzeichnet, dass** die Integrierglieder (12, 13; 23, 24) eine Anti-Windup-Funktionalität aufweisen.

9. Kraftfahrzeug, insbesondere Nutzfahrzeug, aufweisend einen Regler (1) nach einem der vorhergehenden Ansprüche.

**Claims**

1. A controller (1), in particular for controlling engine and continuous braking requests of a motor vehicle, having

   (a) a first control branch (10) which comprises a first integration element (13, 14) and a first proportional element (12), wherein the first control branch (10) is supplied with a first target acceleration (a_Eng) for at least one driving actuator and with an actual acceleration (a_act) and outputs a first actuating variable (M_Eng) for the at least one driving actuator;
   (b) a second control branch (20) which comprises a second integration element (23, 24) and a second proportional element (22), wherein the second control branch (20) is supplied with a second target acceleration (a_EB) for at least one decelerating actuator and with the actual acceleration (a_act) and outputs a first actuating variable (M_EB) for the at least one decelerating actuator; and
   (c) a decision element (30) which is supplied with the first and the second actuating variable (M_Eng, M_EB) and with the starting values (I_Eng, I_EB) of the first and the second integration element (13, 14, 23, 24) and outputs a first output actuating variable (M_Drive) as torque request to the at least one driving actuator, a second output actuating variable (M_Brake) as torque request to the at least one decelerating actuator and an I-component (I_Controller) which is supplied to the first and to the second integration element (14, 24) in each case in a subsequent time step, wherein
   (c1) the first output actuating variable (M_Drive) is set to the value of the first actuating variable, the second output actuating variable (M_Brake) is set to zero and the I-component is set to the starting value of the integration element (13, 14) of the first control branch (10) if both the first actuating variable (M_Eng) and the second actuating variable (M_EB) are greater than zero;
   (c2) the first output actuating variable (M_Drive) is set to zero, the second output actuating variable (M_Brake) is set to the value of the second actuating variable (M_EB) and the I-component is set to the starting value of the integration element (23, 24) of the second control branch (20) if both the first actuating variable (M_Eng) and the second actuating variable (M_EB) are less than zero; and
   (c3) the first output actuating variable (M_Drive) and the second output actuating variable (M_Brake) are set to zero if the first actuating variable (M Eng) is less than zero and the second actuating variable (M_EB) is greater than zero.

2. The controller (1) according to Claim 1, **characterized in that** the decision element (30) is supplied with the I-component (I_Controller) of the previous time step and, if the first actuating variable (M_Eng) is less than zero and the second actuating variable (M EB) is greater than zero, is designed

   (a) to output the starting value of the integration element (13, 14) of the first controller (10) as I-component if the actual acceleration (a act) is less than the first target acceleration (a_Eng);
   (b) to output the starting value of the integration element (23, 24) of the second controller (20) as I-component if the actual acceleration (a act) is greater than the second target acceleration (a_EB); and
   (c) to output the I-component of the previous time step as I-component if the actual acceleration is greater than the first target acceleration (a_Eng) and less than the second target acceleration (a_EB).

3. The controller (1) according to Claim 1 or 2, **characterized**

   (a) **in that** the amplification parameter K_P of the first proportional element (12) has the same value as the amplification parameter K_P of the second proportional element (22); and
   (b) **in that** the amplification parameter K_I of the first integration element (13) has the same value as the amplification parameter K_I of the second integration element (23).

4. The controller (1) according to one of the preceding claims, **characterized in that** a value for the first target acceleration (a_Eng), which value is determined depending on an actual speed of the vehicle, is always less than or less than or equal to a value of the second target acceleration (a_EB), which value is determined depending on the actual speed.

5. The controller (1) according to one of the preceding claims, **characterized in that** the first control branch (10) is supplied with a first pilot control (V_Eng) and the second control branch (20) is supplied with a second pilot control (V_EB), wherein the first and the second pilot control are each determined using the same calculation rule depending on a target acceleration, with the difference that the first target acceleration (a_Eng) is used as target acceleration in the calculation rule in the case of the first pilot control (V_Eng) and the second target acceleration (a_EB) is used as target acceleration in the calculation rule in the case of the second pilot control (V_EB).

6. The controller (1) according to one of the preceding claims, **characterized**

(a) **in that** the first target acceleration (a_Eng) is determined depending on a speed difference between an actual speed of the vehicle and a first set speed (v_Set1) which is determined depending on a selected driver request speed; and
(b) **in that** the second target acceleration (a_EB) is determined depending on a speed difference between the actual speed and a second set speed (v_Set2), wherein the second set speed is related to the first set speed (v_Set1) by means of an offset value ($\Delta$).

7. The controller (1) according to one of the preceding claims, **characterized**

(a) **in that** the first target acceleration (a_Eng) is determined as a minimum of the target accelerations requested of the at least one driving actuator by the driving dynamics devices of the vehicle; and
(b) **in that** the second target acceleration (a EB) is determined as a minimum of the target accelerations requested of the at least one decelerating actuator by the driving dynamics devices of the vehicle.

8. The controller (1) according to one of the preceding claims, **characterized in that** the integration elements (12, 13; 23, 24) have an anti-windup functionality.

9. A motor vehicle, in particular utility vehicle, having a controller (1) according to one of the preceding claims.

**Revendications**

1. Régulateur (1), notamment destiné à la régulation des demandes du moteur et de freinage continu d'un véhicule automobile, comprenant

(a) une première branche de régulation (10) qui comporte un premier élément intégrateur (13, 14) et un premier élément proportionnel (12), la première branche de régulation (10) étant alimentée avec une première accélération de consigne (a_Eng) pour au moins un actionneur moteur et une accélération réelle (a_ist) et délivrant une première grandeur de commande (M_Eng) pour l'au moins un actionneur moteur ;
(b) une deuxième branche de régulation (20) qui comporte un deuxième élément intégrateur (23, 24) et un deuxième élément proportionnel (22), la deuxième branche de régulation (20) étant alimentée avec une deuxième accélération de consigne (a_EB) pour au moins un actionneur ralentisseur et l'accélération réelle (a_ist) et délivrant une deuxième grandeur de commande (M_EB) pour l'au moins un actionneur ralentisseur ; et
(c) un élément de décision (30) qui est alimenté avec la première et la deuxième grandeur de commande (M_Eng, M_EB) et les valeurs initiales (I_Eng, I_EB) du premier et du deuxième élément intégrateur (13, 14, 23, 24) et délivre une première grandeur de commande de sortie (M_Antrieb) en tant que demande de couple à l'au moins un actionneur moteur, une deuxième grandeur de commande de sortie (M_Bremse) en tant que demande de couple à l'au moins un actionneur ralentisseur et une composante I (I_Regler) avec laquelle sont respectivement alimentés le premier et le deuxième élément intégrateur (14, 24) dans une étape temporelle suivante,
(c1) la première grandeur de commande de sortie (M_Antrieb) étant fixée à la valeur de la première grandeur de commande, la deuxième grandeur de commande de sortie (M_Bremse) à zéro et la composante I à la valeur initiale de l'élément intégrateur (13, 14) de la première branche de régulation (10) dans le cas où la première grandeur de commande (M_Eng) et la deuxième grandeur de commande (M_EB) sont toutes deux supérieures à zéro ;
(c2) la première grandeur de commande de sortie (M_Antrieb) étant fixée à zéro, la deuxième grandeur de commande de sortie (M_Bremse) à la valeur de la deuxième grandeur de commande (M_EB) et la composante I à la valeur initiale de l'élément intégrateur (23, 24) de la deuxième branche de régulation (20) dans le cas où la première grandeur de commande (M_Eng) et la deuxième grandeur de commande (M_EB) sont toutes deux inférieures à zéro ; et

(c3) la première grandeur de commande de sortie (M_Antrieb) et la deuxième grandeur de commande de sortie (M_Bremse) étant fixées à zéro dans le cas où la première grandeur de commande (M_Eng) est inférieure à zéro et la deuxième grandeur de commande (M_EB) est supérieure à zéro.

2. Régulateur (1) selon la revendication 1, **caractérisé en ce que** l'élément de décision (30) est alimenté avec la composante I (I_Regler) de l'étape temporelle précédente et configuré pour, dans le cas où la première grandeur de commande (M_Eng) est inférieure à zéro et la deuxième grandeur de commande (M_EB) est supérieure à zéro,

(a) délivrer la valeur initiale de l'élément intégrateur (13, 14) du premier régulateur (10) en tant que composante I dans le cas où l'accélération réelle (a_ist) est inférieure à la première accélération de consigne (a_Eng) ;
(b) délivrer la valeur initiale de l'élément intégrateur (23, 24) du deuxième régulateur (20) en tant que composante I dans le cas où l'accélération réelle (a_ist) est supérieure à la deuxième accélération de consigne (a_EB) ; et
(c) délivrer la composante I de l'étape temporelle précédente en tant que composante I dans le cas où l'accélération réelle est supérieure à la première accélération de consigne (a_Eng) et inférieure à la deuxième accélération de consigne (a_EB).

3. Régulateur (1) selon la revendication 1 ou 2, **caractérisé en ce que**

(a) le paramètre d'amplification k_P du premier élément proportionnel (12) possède la même valeur que le paramètre d'amplification k_P du deuxième élément proportionnel (22) ; et
(b) le paramètre d'amplification K_I du premier élément intégrateur (13) possède la même valeur que le paramètre d'amplification K_I du deuxième élément intégrateur (23).

4. Régulateur (1) selon l'une des revendications précédentes, **caractérisé en ce qu'**une valeur de la première accélération de consigne (a_Eng), déterminée en fonction d'une vitesse réelle du véhicule, est toujours inférieure, ou inférieure ou égale, à une valeur de la deuxième accélération de consigne (a_EB) déterminée en fonction de la vitesse réelle.

5. Régulateur (1) selon l'une des revendications précédentes, **caractérisé en ce que** la première branche de régulation (10) est alimentée avec une première commande pilote (V_Eng) et la deuxième branche de régulation (20) avec une deuxième commande pilote (V_EB), la première et la deuxième commande pilote étant respectivement déterminées avec la même règle de calcul en fonction d'une accélération de consigne, avec pour différence que pour la première commande pilote (V_Eng), c'est la première accélération de consigne (a_Eng) qui intervient en tant qu'accélération de consigne dans la règle de calcul et pour la deuxième commande pilote (V_EB), c'est la deuxième accélération de consigne (a_EB).

6. Régulateur (1) selon l'une des revendications précédentes, **caractérisé en ce que**

(a) la première accélération de consigne (a_Eng) est déterminée en fonction d'une différence de vitesse entre une vitesse réelle du véhicule et une première vitesse commandée (v_Setz1), laquelle est déterminée en fonction d'une vitesse souhaitée du conducteur sélectionnée ; et
(b) la deuxième accélération de consigne (a_EB) est déterminée en fonction d'une différence de vitesse entre la vitesse réelle et une deuxième vitesse commandée (v_Setz2), la deuxième vitesse commandée étant en relation avec la première vitesse commandée (v_Setz1) par le biais d'une valeur de décalage ($\Delta$).

7. Régulateur (1) selon l'une des revendications précédentes, **caractérisé en ce que**

(a) la première accélération de consigne (a_Eng) est déterminée en tant que minimum des accélérations de consigne demandées par les dispositifs dynamiques de conduite du véhicule de la part de l'au moins un actionneur moteur ; et
(b) la deuxième accélération de consigne (a_EB) est déterminée en tant que minimum des accélérations de consigne demandées par les dispositifs dynamiques de conduite du véhicule de la part de l'au moins un actionneur ralentisseur.

8. Régulateur (1) selon l'une des revendications précédentes, **caractérisé en ce que** les éléments intégrateurs (12, 13 ; 23, 24) possèdent une fonctionnalité anti-saturation.

9. Véhicule automobile, notamment véhicule utilitaire, possédant un régulateur (1) selon l'une des revendications précédentes.

FIG. 1

EP 3 100 923 B1

FIG. 2

16

# FIG. 3

**S31**

M_Eng > 0
und
M_EB > 0

ja →

**S32**

M_Antrieb = M_Eng
M_Bremse = 0 Nm
I_Regler = I_Eng

nein ↓

**S33**

M_Eng < 0
und
M_EB < 0

ja →

**S34**

M_Antrieb = 0 Nm
M_Bremse = M_EB
I_Regler = I_EB

nein ↓

**S35**

a_ist < a_Eng

ja →

**S36**

M_Antrieb = 0 Nm
M_Bremse = 0 Nm
I_Regler = I_Eng

nein ↓

**S37**

a_EB < a_ist

ja →

**S38**

M_Antrieb = 0 Nm
M_Bremse = 0 Nm
I_Regler = I_EB

nein ↓

**S39**

M_Antrieb = 0 Nm
M_Bremse = 0 Nm
I_Regler = $z^{-1}$(I_Regler)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013005903 A1